# EUROPEAN PATENT APPLICATION

(11) **EP 4 394 929 A1**
(43) Date of publication of application: **03.07.2024**
(21) Application number: 23787455.7
(22) Date of filing: 14.03.2023
(51) Int. Cl.: H01M 4/36

(54) **POSITIVE ELECTRODE MATERIAL AND PREPARATION METHOD THEREFOR, COMPOSITE POSITIVE ELECTRODE MATERIAL, POSITIVE ELECTRODE SHEET, AND SECONDARY BATTERY**

(30) Priority: 14.04.2022 CN 202210388446
(71) Applicant: Contemporary Amperex Technology Co., Limited, Ningde, Fujian 352100 (CN)
(72) Inventor: SHANG, Yibo, Ningde, Fujian 352100 (CN); XU, Xiaofu, Ningde, Fujian 352100 (CN); PAN, Jianfu, Ningde, Fujian 352100 (CN); ZHANG, Xinyu, Ningde, Fujian 352100 (CN); LIU, Qian, Ningde, Fujian 352100 (CN)
(74) Representative: Gong, Jinping
(86) International application number: PCT/CN2023/081384
(87) International publication number: WO 2023/197807

(57) **Abstract**

This application relates to a positive electrode material and a preparation method thereof, a composite positive electrode material, a positive electrode plate, and a secondary battery. The positive electrode material includes: a core, a first shell layer, and a second shell layer. The first shell layer wraps around a surface of the core. The second shell layer wraps around a surface of the first shell layer. The core includes a lithium manganese iron phosphate material. The first shell layer includes a polyanionic positive electrode material. The polyanionic positive electrode material contains no manganese. The second shell layer includes a hydrophobic conductive material. When ensuring a relatively high energy density of the lithium manganese iron phosphate material, the positive electrode material improves the electrical conductivity of the lithium manganese iron phosphate material, alleviates the problem of hygroscopicity, and reduces manganese dissolution during cycling. The positive electrode material achieves relatively high C-rate performance and cycle stability, and contains a low content of water, thereby facilitating subsequent production and use.

## Description

### CROSS-REFERENCE TO RELATED APPLICATIONS

This application claims priority to Chinese Patent Application No. 2022103884460, filed on April 14, 2022 and entitled "POSITIVE ELECTRODE MATERIAL AND PREPARATION METHOD THEREOF, COMPOSITE POSITIVE ELECTRODE MATERIAL, POSITIVE ELECTRODE PLATE, AND SECONDARY BATTERY", which is incorporated herein by reference in its entirety.

### TECHNICAL FIELD

This application relates to the technical field of lithium-ion batteries, and in particular, to a positive electrode material and a preparation method thereof, a composite positive electrode material, a positive electrode plate, a secondary battery, a battery module, a battery pack, and an electrical device.

### BACKGROUND

Lithium manganese iron phosphate (LiMnₓFe₁₋ₓPO₄, LMFP for short) assumes the same ordered and regular olivine-type structure as lithium iron phosphate, and possesses a higher energy density and a higher compaction density than the lithium iron phosphate, thereby being expected to be one of the materials for upgrading lithium iron phosphate batteries.

However, relatively low conductivity of the lithium manganese iron phosphate (LMFP) hinders exertion of the energy density. In addition, the lithium manganese iron phosphate incurs problems of manganese dissolution and hygroscopicity and is of low stability, thereby impairing cycle stability of the secondary battery.

### SUMMARY

In view of the technical problems described in the background, this application provides a positive electrode material and a preparation method thereof to improve electronic conductivity of a lithium manganese iron phosphate material, alleviate the problems such as manganese dissolution and hygroscopicity, and achieve relatively high C-rate performance and cycle stability.

Further, this application provides a composite positive electrode material containing the positive electrode material.

Further, this application provides a positive electrode plate, a secondary battery, a battery module, a battery pack, and an electrical device that each contain the positive electrode material or the composite positive electrode material.

To achieve the above objectives, a first aspect of this application provides a positive electrode material, including: a core, a first shell layer, and a second shell layer.

The first shell layer wraps around a surface of the core, and the second shell layer wraps around a surface of the first shell layer.

The core includes a lithium manganese iron phosphate material. The first shell layer includes a polyanionic positive electrode material. The polyanionic positive electrode material contains no manganese. The second shell layer includes a hydrophobic conductive material.

Compared with the prior art, this application achieves at least the following beneficial effects:
The positive electrode material assumes a core-shell structure. The core includes a lithium manganese iron phosphate material. The first shell layer includes manganese-free polyanionic positive electrode material. The second shell layer includes a hydrophobic conductive material. The manganese-free polyanionic positive electrode material in the first shell layer is of relatively high stability, and can well contact the lithium manganese iron phosphate material in the core. The second shell layer includes a hydrophobic conductive material, and is hydrophobic and conductive to a relatively high degree. When ensuring a relatively high energy density of the lithium manganese iron phosphate material, the positive electrode material improves the electrical conductivity of the lithium manganese iron phosphate material, alleviates the problem of high hygroscopicity, and reduces manganese dissolution during cycling of the positive electrode material. The positive electrode material achieves relatively high C-rate performance and cycle stability, and contains a low content of water, thereby facilitating subsequent production and use.

In any embodiment of this application, the hydrophobic conductive material includes at least one of a hydrophobic conductive polymer or a hydrophobic conductive carbon material.

In any embodiment of this application, the hydrophobic conductive polymer is at least one selected from polypyrrole, polyaniline, polythiophene, or polyacetylene.

In any embodiment of this application, the hydrophobic conductive carbon material is at least one selected from carbon nanotubes or carbon nanofibers.

In any embodiment of this application, the mass percent of the hydrophobic conductive carbon material in the second shell layer is 2% to 10%.

Optionally, the mass percent of the hydrophobic conductive carbon material in the second shell layer is 4% to 8%.

In any embodiment of this application, the polyanionic positive electrode material is at least one selected from a phosphate-based material, a silicate-based material, or a borate-based material.

In any embodiment of this application, the phosphate-based material includes at least one of LiFePO₄, LiNiPO₄, LiCoPO₄, Li₃V₂(PO₄)₃, LiVOPO₄, or LiTi₂(PO₄)₃.

The silicate-based material includes at least one of Li₂FeSiO₄, Li₂NiSiO₄, or Li₂CoSiO₄.

The borate-based material includes at least one of LiFeBO₃ or LiCoBO₃.

In any embodiment of this application, the ratio of the mass sum of the first shell layer and the second shell layer to the mass of the positive electrode material is 0.1% to 50%.

Optionally, the ratio of the mass sum of the first shell layer and the second shell layer to the mass of the positive electrode material is 1% to 40%.

Optionally, the ratio of the mass sum of the first shell layer and the second shell layer to the mass of the positive electrode material is 1% to 30%.

Optionally, the ratio of the mass sum of the first shell layer and the second shell layer to the mass of the positive electrode material is 1% to 20%.

In any embodiment of this application, in the total mass of the first shell layer and the second shell layer, the mass percent of the second shell layer is 10% to 90%.

Optionally, in the total mass of the first shell layer and the second shell layer, the mass percent of the second shell layer is 20% to 60%.

Optionally, in the total mass of the first shell layer and the second shell layer, the mass percent of the second shell layer is 30% to 50%.

In any embodiment of this application, the ratio of the thickness sum of the first shell layer and the second shell layer to Dv₅₀ of the positive electrode material is 0.01 to 0.45.

Optionally, the ratio of the thickness sum of the first shell layer and the second shell layer to Dv₅₀ of the positive electrode material is 0.03 to 0.39.

Optionally, the ratio of the thickness sum of the first shell layer and the second shell layer to Dv₅₀ of the positive electrode material is 0.03 to 0.31.

Optionally, the ratio of the thickness sum of the first shell layer and the second shell layer to Dv₅₀ of the positive electrode material is 0.03 to 0.26.

A second aspect of this application provides a method for preparing the positive electrode material disclosed in the first aspect. The method includes the following steps:
mixing a raw material of a polyanionic positive electrode material with a lithium manganese iron phosphate material, and performing heat treatment in an inert atmosphere so that a surface of the lithium manganese iron phosphate material is coated with the first shell layer to produce an intermediate; and
mixing a hydrophobic conductive material with the intermediate well so that a surface of the first shell layer is coated with the second shell layer to produce the positive electrode material.

A third aspect of this application provides a composite positive electrode material, including a ternary positive electrode material and the positive electrode material disclosed in the first aspect.

A fourth aspect of this application provides a positive electrode plate, including the positive electrode material disclosed in the first aspect or the composite positive electrode material disclosed in the third aspect.

A fifth aspect of this application provides a secondary battery, including the positive electrode plate disclosed in the fourth aspect.

A sixth aspect of this application provides a battery module, including the secondary battery disclosed in the fifth aspect.

A seventh aspect of this application provides a battery pack, including the battery module disclosed in the sixth aspect.

An eighth aspect of this application further provides an electrical device, including at least one of the secondary battery in the fifth aspect, the battery module in the sixth aspect, or the battery pack in the seventh aspect.

### BRIEF DESCRIPTION OF DRAWINGS

By reading the following detailed description of optional embodiments, a person of ordinary skill in the art becomes clearly aware of various other advantages and benefits. The drawings are merely intended to illustrate the optional embodiments, but not to limit this application. In all the drawings, the same reference numeral represents the same component. In the drawings:
FIG. 1 is a schematic structural diagram of a positive electrode material according to an embodiment of this application;
FIG. 2 is a schematic diagram of a secondary battery according to an embodiment of this application;
FIG. 3 is an exploded view of the secondary battery shown in FIG. 2 according to an embodiment of this application;
FIG. 4 is a schematic diagram of a battery module according to an embodiment of this application;
FIG. 5 is a schematic diagram of a battery pack according to an embodiment of this application;
FIG. 6 is an exploded view of the battery pack shown in FIG. 5 according to an embodiment of this application;
FIG. 7 is a schematic diagram of an electrical device that uses a secondary battery as a power supply according to an embodiment of this application;
FIG. 8 is a transmission electron microscope (TEM) image of a positive electrode material according to Embodiment 1 of this application; and
FIG. 9 is a transmission electron microscope (TEM) image of a positive electrode material according to Comparative Embodiment 1 of this application.

### List of reference numerals:

1. battery pack; 2. upper box; 3. lower box; 4. battery module; 5. secondary battery; 51. housing; 52. electrode assembly; 53. top cap assembly; 6. positive electrode material; 61. core; 62. first shell layer; 63. second shell layer.

### DETAILED DESCRIPTION OF EMBODIMENTS

For ease of understanding this application, the following describes this application more comprehensively with reference to related drawings. The drawings show exemplary embodiments of this application. However, this application may be implemented in many different forms without being limited to the embodiments described herein. Rather, such embodiments are provided to enable a more thorough and comprehensive understanding of the disclosure of this application.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein includes any and all combinations of one or more relevant items enumerated.

For brevity, some specific numerical ranges are disclosed herein for illustrative purpose only. However, any lower limit may be combined with any upper limit to form an unspecified range, any lower limit may be combined with any other lower limit to form an unspecified range, and any upper limit may be combined with any other upper limit to form an unspecified range. In addition, each separately disclosed point or single numerical value may be used as a lower limit or upper limit to combine with any other point or other single numerical value or with any other lower or upper limit to form an unspecified range.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

It is hereby noted that in the description herein, unless otherwise specified, a range defined by a numerical value qualified by "at least" or "at most" includes this numerical value, and the word "more" in the phrase "one or more of" means at least two.

In the description herein, unless otherwise specified, the term "or" is inclusive. In other words, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent). Unless otherwise specified, the terms used in this application have the well-known meanings commonly understood by a person skilled in the art. Unless otherwise specified, the value of a parameter mentioned in this application may be measured by using a measurement method commonly used in the art (for example, may be tested according to the method described in an embodiment of this application).

Currently, mainstream lithium-ion battery positive electrode materials are a lithium iron phosphate material and a ternary positive electrode material. A voltage plateau of the ternary positive electrode material is generally 3.7 V, much higher than 3.4 V, a voltage plateau of the lithium iron phosphate. The ternary positive electrode material occupies a dominant position in power batteries. However, the ternary material contains metals such as cobalt and nickel that are constantly costly and of lower safety. The voltage plateau of lithium manganese iron phosphate is as high as 4.1 V and 3.4 V In addition, the lithium manganese iron phosphate possesses a higher theoretical energy density and a higher compaction density than the lithium iron phosphate material, and is expected to become a new generation of positive electrode materials for lithium-ion batteries.

However, the electrical conductivity of the lithium manganese iron phosphate is relatively low, making it difficult to sufficiently exert the theoretical energy density of the material. Moreover, with manganese contained in the material, the manganese on the surface of the lithium manganese iron phosphate material is prone to Jahn-Teller distortion and disproportionation reaction, thereby resulting in manganese dissolution, disrupting the surface structure of the material, and impairing the structural stability of the lithium manganese iron phosphate material. In addition, the high water content of the lithium manganese iron phosphate material is unfavorable to preparation of a battery and affects the performance of the battery.

To alleviate the above problems of the lithium manganese iron phosphate material, this application provides a positive electrode material and a preparation method thereof, a composite positive electrode material that uses the positive electrode material, a secondary battery, a battery module, a battery pack, and an electrical device. The secondary battery is applicable to various battery-powered electrical devices such as a mobile phone, a portable device, a laptop computer, an electric power cart, an electrical toy, an electrical tool, an electric vehicle, a ship, and a spacecraft. For example, the spacecraft includes an airplane, a rocket, a space shuttle, a spaceship, and the like.

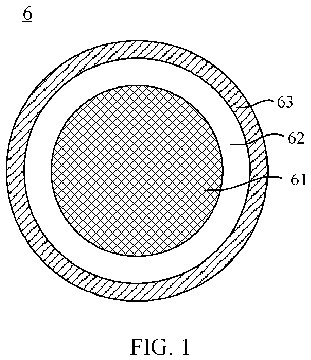

Referring to FIG. 1, an embodiment of this application provides a positive electrode material 6, including: a core 61, a first shell layer 62, and a second shell layer 63.

The first shell layer 62 wraps around a surface of the core 61. The second shell layer 63 wraps around a surface of the first shell layer 62.

The core 61 includes a lithium manganese iron phosphate material. The first shell layer 62 includes a polyanionic positive electrode material. The polyanionic positive electrode material contains no manganese. The second shell layer 63 includes a hydrophobic conductive material.

The positive electrode material 6 assumes a core-shell structure. The core 61 includes a lithium manganese iron phosphate material. The first shell layer 62 includes manganese-free polyanionic positive electrode material. The second shell layer 63 includes a hydrophobic conductive material. The manganese-free polyanionic positive electrode material in the first shell layer 62 is of relatively high stability, and can well contact the lithium manganese iron phosphate material in the core 61. The second shell layer 63 includes a hydrophobic conductive material, and is hydrophobic and conductive to a relatively high degree. When ensuring a relatively high energy density of the lithium manganese iron phosphate material, the positive electrode material 6 improves the electrical conductivity of the lithium manganese iron phosphate material, alleviates the problem of high hygroscopicity, and reduces manganese dissolution during cycling of the positive electrode material. The positive electrode material 6 achieves relatively high C-rate performance and cycle stability, and contains a low content of water, thereby facilitating subsequent production and use.

Specifically, the chemical structural formula of lithium manganese iron phosphate (LMFP) is LiMnₓFe₁₋ₓPO₄, where 0 < x < 1. Depending on the value of x, the lithium manganese iron phosphate includes LiMn_{0.8}Fe_{0.2}PO₄ (LMFP82), LiMn_{0.6}Fe_{0.4}PO₄ (LMFP64), LiMn_{0.4}Fe_{0.6}PO₄ (LMFP46), LiMn_{0.2}Fe_{0.8}PO₄ (LMFP28), and the like.

In some embodiments, the hydrophobic conductive material includes at least one of a hydrophobic conductive polymer or a hydrophobic conductive carbon material. Further, the hydrophobic conductive material contacts water at a contact angle greater than 130°. The hydrophobic conductive material is well hydrophobic and conductive.

In some embodiments, the hydrophobic conductive polymer is at least one selected from polypyrrole, polyaniline, polythiophene, or polyacetylene. The hydrophobic conductive polymer is not only of high electrical conductivity, but also of high hydrophobicity, and can improve the electrical conductivity and hydrophobicity of the positive electrode material 6.

In some embodiments, the hydrophobic conductive carbon material is at least one selected from carbon nanotubes or carbon nanofibers. The hydrophobic conductive carbon material is not only of high electrical conductivity, but also of high hydrophobicity, and can improve the electrical conductivity and hydrophobicity of the positive electrode material 6.

In some embodiments, the hydrophobic conductive material in the second shell layer 63 includes a hydrophobic conductive polymer and a hydrophobic conductive carbon material. A mass percent of the hydrophobic conductive carbon material in the second shell layer is 2% to 10%. By adjusting the mass percent of the hydrophobic conductive carbon material in the second shell layer 63, this application can further obtain a positive electrode material 6 of high electrical conductivity and hydrophobicity, and further improve the C-rate performance and cycle stability of the positive electrode material 6. Optionally, the mass percent of the hydrophobic conductive carbon material in the second shell layer 63 is 2%, 3%, 4%, 5%, 6%, 7%, 8%, 9%, or 10%.

Further optionally, the mass percent of the hydrophobic conductive carbon material in the second shell layer 63 is 4% to 8%. When the mass percent of the hydrophobic conductive carbon material in the second shell layer 63 falls within a range of 4% to 8%, the conductivity and hydrophobicity of the second shell layer 63 are higher.

In some embodiments, the polyanionic positive electrode material is at least one selected from a phosphate-based material, a silicate-based material, or a borate-based material. The polyanionic positive electrode material assumes a structure similar to the lithium manganese iron phosphate, and, when used in the first shell layer 62, can reduce manganese dissolution from the lithium manganese iron phosphate without significantly affecting the energy density of the positive electrode material 6. Preferably, the polyanionic positive electrode material is a phosphate-based material. The phosphate-based material is more similar to the lithium manganese iron phosphate in structure, thereby implementing a more stable conductive contact between the core 61 and the first shell layer 62.

In some embodiments, the phosphate-based material includes at least one of LiFePO₄, LiNiPO₄, LiCoPO₄, Li₃V₂(PO₄)₃, LiVOPO₄, or LiTi₂(PO₄)₃. The silicate-based material includes at least one of Li₂FeSiO₄, Li₂NiSiO₄, or Li₂CoSiO₄. The borate-based material includes at least one of LiFeBO₃ or LiCoBO₃.

In some embodiments, the ratio of the mass sum of the first shell layer 62 and the second shell layer 63 to the mass of the positive electrode material 6 is 0.1% to 50%. Optionally, the ratio of the mass sum of the first shell layer 62 and the second shell layer 63 to the mass of the positive electrode material 6 is 0.1%, 0.5%, 1%, 5%, 8%, 10%, 15%, 20%, 25%, 30%, 35%, 40%, 45%, or 50%.

Further optionally, the ratio of the mass sum of the first shell layer 62 and the second shell layer 63 to the mass of the positive electrode material 6 is 1% to 40%. By controlling the mass percent of the first shell layer 62 and the second shell layer 63 in the positive electrode material 6, this application further enhances the cycle stability of the positive electrode material 6. If the mass percent of the shell layer is overly low, the effect of improving the lithium manganese iron phosphate is insignificant. If the mass percent of the shell layer is overly high, the manganese dissolution and water content in the positive electrode material 6 are not able to be further improved, and the cycle performance of the positive electrode material 6 is little improved. That is probably because the content of the lithium manganese iron phosphate in the positive electrode material 6 is reduced. Preferably, the ratio of the mass sum of the first shell layer 62 and the second shell layer 63 to the mass of the positive electrode material 6 is 1% to 30%. More preferably, the ratio of the mass sum of the first shell layer 62 and the second shell layer 63 to the mass of the positive electrode material 6 is 1% to 20%.

In some embodiments, in the total mass of the first shell layer 62 and the second shell layer 63, the mass percent of the second shell layer 63 is 10% to 90%. By adjusting the mass percent of the second shell layer 63 in the total mass of the first shell layer 62 and the second shell layer 63 to fall within the above range, this application can control the content of manganese dissolved out and the water content of the positive electrode material 6 to stay at a relatively low level, and the overall performance of the positive electrode material 6 is relatively high. Optionally, in the total mass of the first shell layer 62 and the second shell layer 63, the mass percent of the second shell layer 63 is 10%, 15%, 20%, 25%, 30%, 35%, 40%, 45%, 50%, 55%, 60%, 65%, 70%, 75%, 80%, 85%, or 90%.

Preferably, in the total mass of the first shell layer 62 and the second shell layer 63, the mass percent of the second shell layer 63 is 20% to 60%. More preferably, in the total mass of the first shell layer 62 and the second shell layer 63, the mass percent of the second shell layer 63 is 30% to 50%. By adjusting the mass percent of the second shell layer 63 in the total mass of the first shell layer 62 and the second shell layer 63 to fall within the above range, this application can control both the content of manganese dissolved out and the water content of the positive electrode material 6 to stay at a low level, and especially reduce the water content of the positive electrode material 6 significantly, so that both the cycle performance and the C-rate performance of the positive electrode material 6 are relatively high.

In some embodiments, the ratio of the thickness sum of the first shell layer 62 and the second shell layer 63 to Dv₅₀ of the positive electrode material 6 is 0.01 to 0.45. Specifically, Dv₅₀ represents an average particle diameter corresponding to a cumulative volume percentage of 50% in a volume-based particle size distribution curve. Optionally, the ratio of the thickness sum of the first shell layer 62 and the second shell layer 63 to Dv₅₀ of the positive electrode material 6 is 0.01, 0.05, 0.1, 0.15, 0.2, 0.25, 0.3, 0.35, 0.4, or 0.45.

Further, the ratio of the thickness sum of the first shell layer 62 and the second shell layer 63 to Dv₅₀ of the positive electrode material 6 is 0.03 to 0.39. By controlling the ratio of the thickness of the shell layers to Dv₅₀ of the positive electrode material 6 to fall within the above range, this application can further enhance the cycle stability of the positive electrode material 6. Preferably, the ratio of the thickness sum of the first shell layer 62 and the second shell layer 63 to Dv₅₀ of the positive electrode material 6 is 0.03 to 0.31. More preferably, the ratio of the thickness sum of the first shell layer 62 and the second shell layer 63 to Dv₅₀ of the positive electrode material 6 is 0.03 to 0.26.

An embodiment of this application further provides a method for preparing the positive electrode material, including steps S110 and S120:
Step S110: Mixing a raw material of a polyanionic positive electrode material with a lithium manganese iron phosphate material, and performing heat treatment in an inert atmosphere so that a surface of the lithium manganese iron phosphate material is coated with the first shell layer to produce an intermediate.
Step S 120: Mixing a hydrophobic conductive material with the intermediate well so that a surface of the first shell layer is coated with the second shell layer to produce the positive electrode material.

The method for preparing the positive electrode material is simple to operate. The positive electrode material produced assumes a core-shell structure. The lithium iron manganese phosphate in the positive electrode material is coated with the first shell layer and the second shell layer sequentially, and possesses improved stability and electrical conductivity. The positive electrode material achieves relatively high C-rate performance and cycle stability, and contains a low content of water, thereby facilitating subsequent production and use.

Specifically, in step S 110, the raw materials for preparing the polyanionic positive electrode material include a lithium source, a doped metal salt, and an acid source corresponding to polyanions. As an example, the polyanionic positive electrode material is lithium iron phosphate. The raw materials for preparing the positive electrode material include a lithium source, an iron salt, and a phosphoric acid source. Optionally, the lithium source is at least one selected from lithium carbonate, lithium acetate, lithium hydroxide, lithium nitrate, lithium sulfate, lithium chloride, lithium oxalate, lithium phosphate, lithium hydrogen phosphate, lithium citrate, lithium silicate, or lithium metaborate. The doped metal salt is at least one selected from oxalate, phosphate, acetate, sulfate, citrate, or nitrate. The acid sources corresponding to the polyanions include a phosphate source, a silicate source, or a borate source. Further, the phosphate source is at least one selected from phosphoric acid, ammonium phosphate, ammonium dihydrogen phosphate, or diammonium hydrogen phosphate. The silicate source is at least one selected from silicic acid, metasilicic acid, silicon tetrachloride, silicon dioxide, or ethyl orthosilicate. The borate source is at least one selected from boric acid, ammonium borate, or boron oxide.

In some embodiments, in step S 110, the temperature of the heat treatment is 500 °C to 1200 °C, and the duration of the heat treatment is 5 to 20 hours.

Specifically, in step S120, the hydrophobic conductive material and the intermediate are mixed well by being ultrasonicated in an organic solvent. In an embodiment of this application, the organic solvent is N-methyl-pyrrolidone (NMP). Understandably, the organic solvent is not limited to NMP.

Further, in step S120, after being mixed well by being ultrasonicated in the organic solvent, the hydrophobic conductive material and the intermediate further undergo solid-liquid separation, suction-filtering, washing, and drying to obtain a positive electrode material.

In some embodiments, the hydrophobic conductive material includes a conductive polymer and a hydrophobic conductive carbon material. Before step S120, the method further includes step S121: ultrasonicating and mixing the conductive polymer and the hydrophobic conductive carbon material in the organic solvent. In an embodiment of this application, the organic solvent is N-methyl-pyrrolidone (NMP). Understandably, the organic solvent is not limited to NMP. Specifically, in step S121, the ultrasonication is performed at 50 °C to 100 °C.

An embodiment of this application further provides a composite positive electrode material, including a ternary positive electrode material and the positive electrode material described above.

Specifically, the ternary positive electrode material includes at least one of lithium nickel cobalt manganese oxide (NCM), coated and modified lithium nickel cobalt manganese oxide (NCM), lithium nickel cobalt aluminum oxide (NCA), or coated and modified lithium nickel cobalt aluminum oxide (NCA). Depending on the contents of nickel, cobalt, and manganese, the lithium nickel cobalt manganese oxide (NCM) is LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811), or the like. Further, the lithium nickel cobalt manganese oxide is a layered lithium nickel cobalt manganese oxide.

As an example, the lithium nickel cobalt aluminum oxide (NCA) is LiNi_{0.85}Co_{0.15}Al_{0.05}O₂ or the like.

In the composite positive electrode material described above, the mass ratio between the ternary positive electrode material and the above positive electrode material is controlled to be appropriate, so that the C-rate performance of the composite positive electrode material is higher.

In some embodiments, the mass ratio between the ternary positive electrode material and the positive electrode material 6 is (1 to 9): (9 to 1). Further, the mass ratio between the ternary positive electrode material and the positive electrode material 6 is (2 to 8): (8 to 2).

Further, in the total mass of the ternary positive electrode material and the positive electrode material 6, the mass percent of the positive electrode material 6 is 10% to 90%, and further, is 20% to 80%.

In addition, a positive electrode plate, a secondary battery, a battery module, a battery pack, and an electrical device of this application are described below with due reference to drawings.

In an embodiment of this application, a secondary battery is provided.

Generally, the secondary battery includes a positive electrode plate, a negative electrode plate, an electrolyte, and a separator. In a charge-and-discharge cycle of the battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions.

### Positive electrode plate

The positive electrode plate includes a positive current collector and a positive film layer that overlays at least one surface of the positive current collector. The positive film layer includes the positive active material according to the first aspect of this application or the composite positive electrode material according to the third aspect of this application.

As an example, the positive current collector includes two surfaces opposite to each other in a thickness direction of the positive current collector. The positive film layer is disposed on either or both of the two opposite surfaces of the positive current collector.

In some embodiments, the positive current collector may be metal foil or a composite current collector. For example, the metal foil may be aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the positive film layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive film layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold pressing to obtain the positive electrode plate.

### Negative electrode plate

The negative electrode plate includes a negative current collector and a negative film layer disposed on at least one surface of the negative current collector. The negative film layer includes a negative active material.

As an example, the negative current collector includes two surfaces opposite to each other in a thickness direction of the negative current collector. The negative film layer is disposed on either or both of the two opposite surfaces of the negative current collector.

In some embodiments, the negative current collector may be metal foil or a composite current collector. For example, the metal foil may be copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative active material may be a negative active material well known for use in a battery in the art. As an example, the negative active material may include at least one of the following materials: artificial graphite, natural graphite, soft carbon, hard carbon, silicon-based material, tin-based material, lithium titanium oxide, and the like. The silicon-based material may be at least one selected from simple-substance silicon, a silicon-oxygen compound, a silicon-carbon composite, a silicon-nitrogen composite, and a silicon alloy. The tin-based material may be at least one selected from simple-substance tin, a tin-oxygen compound, or a tin alloy. However, this application is not limited to such materials, and other conventional materials usable as a negative active material of a battery may be used instead. One of the negative active materials may be used alone, or at least two thereof may be used in combination.

In some embodiments, the negative film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative film layer further optionally includes a conductive agent. The conductive agent may be at least one selected from superconductive carbon, acetylene black, carbon black, Ketjen black, carbon dots, carbon nanotubes, graphene, or carbon nanofibers.

In some embodiments, the negative film layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (such as deionized water) to form a negative electrode slurry, coating a negative current collector with the negative electrode slurry, and performing steps such as drying and cold calendering to obtain the negative electrode plate.

### Electrolyte

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is an electrolyte solution. The electrolyte solution includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some embodiments, the electrolyte solution further optionally includes an additive. For example, the additive may include a negative film-forming additive or a positive film-forming additive. The additive may further include an additive capable of improving specified performance of the battery, for example, an additive for improving overcharge performance of the battery, or an additive for improving high- or low-temperature performance of the battery.

### Separator

In some embodiments, the secondary battery further includes a separator. The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

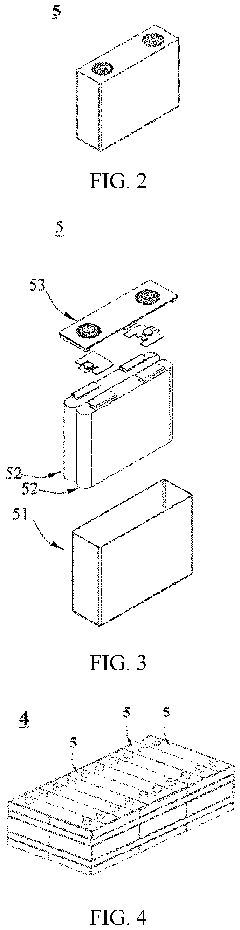

The shape of the secondary battery is not particularly limited in this application, and may be cylindrical, prismatic or any other shape. FIG. 2 shows a prismatic secondary battery 5 as an example.

In some embodiments, referring to FIG. 3, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is made on the housing 51. The cover plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in a secondary battery 5 may be one or more, and may be selected by a person skilled in the art as actually required.

In some embodiments, the secondary battery may be assembled into a battery module. The battery module may include one or more secondary batteries, and the specific number of secondary batteries in a battery module may be selected by a person skilled in the art depending on practical applications and capacity of the battery module.

FIG. 4 shows a battery module 4 as an example. Referring to FIG. 4, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

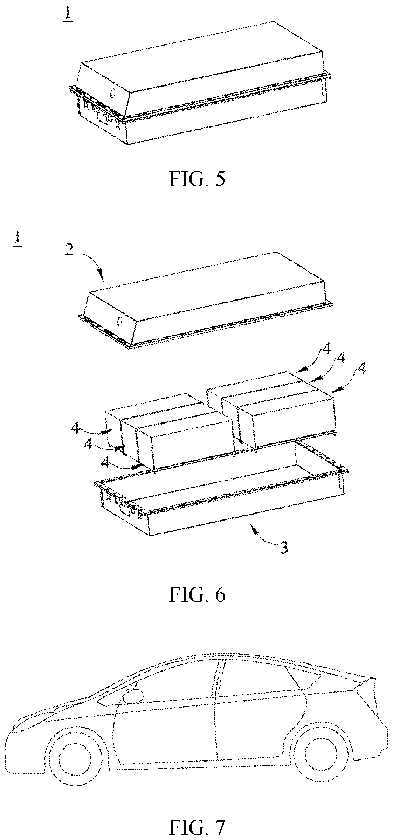

FIG. 5 and FIG. 6 show a battery pack 1 as an example. Referring to FIG. 5 and FIG. 6, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

Further, this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

FIG. 7 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

The following further describes this application with reference to specific embodiments. Specifically, in the following embodiments and comparative embodiments, the lithium manganese iron phosphate is LiMn_{0.6}Fe_{0.4}PO₄, abbreviated as LMFP64.

### Embodiment 1

The positive electrode material in this embodiment is prepared according to the following steps:
Adding 0.253 gram of lithium acetate, 0.547 gram of ferrous oxalate, and 0.437 gram of ammonium dihydrogen phosphate into an aqueous solution, ultrasonically stirring the solution until the reaction is thorough, adding lithium manganese iron phosphate, and ultrasonically stirring the mixture, and then separating the solid from the liquid in the suspension. Washing and drying the resultant solid, and then heat-treating the dried solid at 700 °C for 10 hours in an inert atmosphere to obtain lithium manganese iron phosphate coated with lithium iron phosphate.

Adding 0.376 gram of polyaniline and 0.343 gram of carbon nanotube dispersion solution (with a solid content of 7%) into an 80 °C N-methyl-pyrrolidone (NMP for short) solvent. Ultrasonically stirring and mixing well the mixture, and then adding the lithium manganese iron phosphate coated with the lithium iron phosphate. Continuing to ultrasonically stir the mixture until a homogeneous state, separating the solid from the liquid in the suspension, and then performing vacuum filtration, washing, and drying on the solid substance to obtain a positive electrode material.

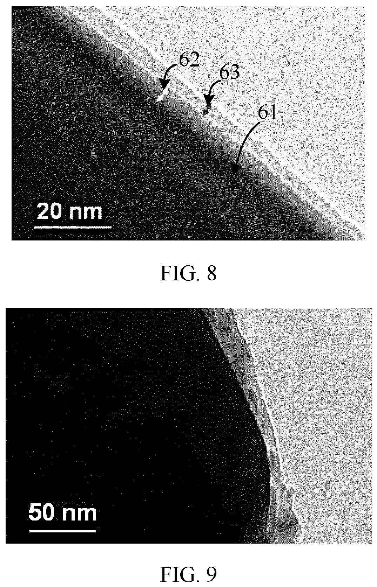

Referring to FIG. 8, which shows a transmission electron microscope (TEM) image of the positive electrode material prepared in Embodiment 1, it can be seen that the prepared positive electrode material assumes a double-coated structure. The positive electrode material includes a core 61, a first shell layer 62, and a second shell layer 62 sequentially from inside to outside.

### Comparative Embodiment 1

The positive electrode material provided in this comparative embodiment is unmodified lithium manganese iron phosphate, that is, the lithium manganese iron phosphate used in the preparation process of Embodiment 1.

Referring to FIG. 9, which shows a transmission electron microscope (TEM) image of the positive electrode material in Comparative Embodiment 1, it can be seen that the lithium iron phosphate interface of the positive electrode material is clear, without any coating structure on the surface.

### Embodiments 2 to 9

The preparation method of the positive electrode material in Embodiments 2 to 9 is substantially the same as that in Embodiment 1 except: the ratio of the mass sum of the first shell layer and the second shell layer to the mass of the positive electrode material (briefly referred to as a shell layer mass sum percentage), and the ratio of the thickness sum of the first shell layer and the second shell layer to Dv₅₀ of the positive electrode material (briefly referred to as a h/d ratio). Specifically, the h/d ratio is observed through a transmission electron microscope (TEM) image.

The shell layer mass sum percentage and the h/d ratio in the positive electrode materials of Embodiments 1 to 9 are recorded in Table 1. The amount of materials used in Embodiments 2 to 9 is adjusted based on the percentages specified in Table 1.

**Table 1 Shell layer mass sum percentage, ratio of the thickness sum of the first shell layer and the second shell layer to Dv₅₀ of the positive electrode material (h/d), and mass percent of the second shell layer in a total mass of shell layers (the first shell layer and the second shell layer) in the positive electrode materials of Embodiments 1 to 9**

| Embodiment | Shell layer mass sum percentage (%) | h/d | Mass percent of second shell layer in total mass of shell layers (%) |
|---|---|---|---|
| Embodiment 1 | 1 | 0.03 | 40 |
| Embodiment 2 | 0.1 | 0.01 | 40 |
| Embodiment 3 | 5 | 0.15 | 40 |
| Embodiment 4 | 10 | 0.2 | 40 |
| Embodiment 5 | 15 | 0.23 | 40 |
| Embodiment 6 | 20 | 0.26 | 40 |
| Embodiment 7 | 30 | 0.31 | 40 |
| Embodiment 8 | 40 | 0.39 | 40 |
| Embodiment 9 | 50 | 0.45 | 40 |

As an example, the positive electrode material in Embodiment 2 is prepared according to the following steps:
Adding 0.025 gram of lithium acetate, 0.055 gram of ferrous oxalate, and 0.044 gram of ammonium dihydrogen phosphate into an aqueous solution, ultrasonically stirring the solution until the reaction is thorough, adding lithium manganese iron phosphate, and ultrasonically stirring the mixture, and then separating the solid from the liquid in the suspension. Washing and drying the resultant solid, and then heat-treating the dried solid at 700 °C for 10 hours in an inert atmosphere to obtain lithium manganese iron phosphate coated with lithium iron phosphate.

Adding 0.038 gram of polyaniline and 0.034 gram of carbon nanotube dispersion solution (with a solid content of 7%) into an 80 °C NMP solvent. Ultrasonically stirring and mixing well the mixture, and then adding the lithium manganese iron phosphate coated with the lithium iron phosphate. Continuing to ultrasonically stir the mixture until a homogeneous state, separating the solid from the liquid in the suspension, and then performing vacuum filtration, washing, and drying on the solid substance to obtain a positive electrode material.

### Embodiments 10 to 17

The preparation method of the positive electrode material in Embodiments 10 to 17 is substantially the same as that in Embodiment 3 except the mass percent of the second shell layer in the shell layers (the first shell layer and the second shell layer). The mass percent of the second shell layer in the shell layers (the first shell layer and the second shell layer) in the positive electrode materials of Embodiment 3 and Embodiments 10 to 17 is recorded in Table 2. The amount of materials used in Embodiments 10 to 17 is adjusted based on the percentages specified in Table 2.

As an example, the positive electrode material in Embodiment 10 is prepared according to the following steps:
Adding 1.899 grams of lithium acetate, 4.101 grams of ferrous oxalate, and 3.275 grams of ammonium dihydrogen phosphate into an aqueous solution, ultrasonically stirring the solution until the reaction is thorough, adding lithium manganese iron phosphate, and ultrasonically stirring the mixture, and then separating the solid from the liquid in the suspension. Washing and drying the resultant solid, and then heat-treating the dried solid at 700 °C for 10 hours in an inert atmosphere to obtain lithium manganese iron phosphate coated with lithium iron phosphate.

Adding 0.47 gram of polyaniline and 0.428 gram of carbon nanotube dispersion solution (with a solid content of 7%) into an 80 °C NMP solvent. Ultrasonically stirring and mixing well the mixture, and then adding the lithium manganese iron phosphate coated with the lithium iron phosphate. Continuing to ultrasonically stir the mixture until a homogeneous state, separating the solid from the liquid in the suspension, and then performing vacuum filtration, washing, and drying on the solid substance to obtain a positive electrode material.

### Comparative Embodiment 2

The positive electrode material in this comparative embodiment is prepared according to the following steps:
Adding 10.54 grams of lithium acetate, 22.79 grams of ferrous oxalate, and 18.21 grams of ammonium dihydrogen phosphate into an aqueous solution, ultrasonically stirring the solution until the reaction is thorough, adding lithium manganese iron phosphate, and ultrasonically stirring the mixture, and then separating the solid from the liquid in the suspension. Washing and drying the resultant solid, and then heat-treating the dried solid at 700 °C for 10 hours in an inert atmosphere to obtain a positive electrode material.

### Comparative Embodiment 3

The positive electrode material in this comparative embodiment is prepared according to the following steps:
Adding 23.5 grams of polyaniline and 21.44 grams of carbon nanotube dispersion solution (with a solid content of 7%) into an 80 °C NMP solvent. Ultrasonically stirring and mixing well the mixture, and then adding the lithium manganese iron phosphate. Continuing to ultrasonically stir the mixture until a homogeneous state, separating the solid from the liquid in the suspension, and then performing vacuum filtration, washing, and drying on the solid substance to obtain a positive electrode material.

The mass percent of the second shell layer in the shell layers (the first shell layer and the second shell layer) in the positive electrode materials of Comparative Embodiments 2 to 3 is recorded in Table 2. The raw materials and dosages for the preparation in Embodiments 1 to 17 and Comparative Embodiments 1 to 3 are recorded in Table 3.

**Table 2 Shell layer mass sum percentage and the ratio of the mass percent of the second shell layer in the shell layers (the first shell layer and the second shell layer) in the positive electrode materials of Embodiment 3 and Embodiments 10 to 17**

| Embodiment | Shell layer mass sum percentage (%) | Mass percent of second shell layer in total mass of shell layers (%) |
|---|---|---|
| Comparative Embodiment 2 | 5 | 0 |
| Embodiment 10 | 5 | 10 |
| Embodiment 11 | 5 | 20 |
| Embodiment 12 | 5 | 30 |
| Embodiment 3 | 5 | 40 |
| Embodiment 13 | 5 | 50 |
| Embodiment 14 | 5 | 60 |
| Embodiment 15 | 5 | 70 |
| Embodiment 16 | 5 | 80 |
| Embodiment 17 | 5 | 90 |
| Comparative Embodiment 3 | 5 | 100 |

### Comparative Embodiment 4

Ultrasonicating and mixing well 95 grams of lithium manganese iron phosphate, 3 grams of lithium iron phosphate, 1.88 grams of polyaniline, and 1.715 grams of carbon nanotube dispersion solution in an N-methyl-pyrrolidone (NMP) solvent at 80 °C. Separating the solid from the liquid in the mixed solution, and then performing vacuum filtration, washing, and drying on the resultant solid substance to obtain a positive electrode material. In the positive electrode material, no coating structure exists on the surface of the lithium manganese iron phosphate.

**Table 3 Raw materials and dosages for the preparation in Embodiments 1 to 17 and Comparative Embodiments 1 to 3**

| Embodiment | Core (g) | First shell layer (g) | | | Second shell layer (g) | |
|---|---|---|---|---|---|---|
| | Lithium manganese iron phosphate | Lithium acetate | Ferrous oxalate | Ammonium dihydrogen phosphate | Polyaniline | Carbon nanotube dispersion solution (with a solid content of 7%) |
| Embodiment 1 | 99 | 0.253 | 0.547 | 0.437 | 0.376 | 0.343 |
| Embodiment 2 | 99.9 | 0.025 | 0.055 | 0.044 | 0.038 | 0.034 |
| Embodiment 3 | 95 | 1.265 | 2.735 | 2.185 | 1.88 | 1.715 |
| Embodiment 4 | 90 | 2.53 | 5.47 | 4.37 | 3.76 | 3.43 |
| Embodiment 5 | 85 | 3.795 | 8.205 | 6.555 | 5.64 | 5.145 |
| Embodiment 6 | 80 | 5.06 | 10.94 | 8.74 | 7.52 | 6.86 |
| Embodiment 7 | 70 | 7.58 | 16.41 | 13.11 | 11.28 | 10.29 |
| Embodiment 8 | 60 | 10.12 | 21.88 | 17.48 | 15.04 | 13.72 |
| Embodiment 9 | 50 | 12.65 | 27.35 | 21.85 | 18.8 | 17.15 |
| Embodiment 10 | 95 | 1.898 | 4.102 | 3.278 | 0.47 | 0.429 |
| Embodiment 11 | 95 | 1.687 | 3.647 | 2.913 | 0.94 | 0.858 |
| Embodiment 12 | 95 | 1.476 | 3.192 | 2.548 | 1.41 | 1.287 |
| Embodiment 13 | 95 | 1.054 | 2.28 | 1.82 | 2.35 | 2.145 |
| Embodiment 14 | 95 | 0.843 | 1.824 | 1.456 | 2.82 | 2.574 |
| Embodiment 15 | 95 | 0.632 | 1.368 | 1.092 | 3.29 | 3.003 |
| Embodiment 16 | 95 | 0.422 | 0.912 | 0.728 | 3.76 | 3.432 |
| Embodiment 17 | 95 | 0.211 | 0.456 | 0.364 | 4.23 | 3.861 |
| Comparative Embodiment 1 | 100 | / | / | / | / | / |
| Comparative Embodiment 2 | 95 | 2.11 | 4.56 | 3.64 | / | / |
| Comparative Embodiment 3 | 95 | / | / | / | 4.7 | 4.29 |

### Embodiments 18 to 21

The preparation method of the positive electrode material in Embodiments 18 to 21 is substantially the same as that in Embodiment 14 except the raw materials for preparing the second shell layer. The raw materials for preparing the second shell layer in Embodiment 14 and Embodiments 18 to 21 are recorded in Table 4, and the preparation method is adjusted based on Table 4.

**Table 4 Raw materials for preparing the second shell layer in the positive electrode material in Embodiment 14 and Embodiments 18 to 21**

| Embodiment | Conductive polymer | Hydrophobic conductive carbon material | Shell layer mass sum percentage (%) | Mass percent of second shell layer in total mass of shell layers (%) |
|---|---|---|---|---|
| Embodiment 14 | Polyaniline | Carbon nanotube | 5 | 60 |
| Embodiment 18 | Polypyrrole | Carbon nanotube | 5 | 60 |
| Embodiment 19 | Polythiophene | Carbon nanotube | 5 | 60 |
| Embodiment 20 | Polyacetylene | Carbon nanotube | 5 | 60 |
| Embodiment 21 | Polyaniline | Carbon nanofibers | 5 | 60 |

As an example, the positive electrode material in Embodiment 18 is prepared according to the following steps:
Adding 0.844 gram of lithium acetate, 1.823 grams of ferrous oxalate, and 1.456 grams of ammonium dihydrogen phosphate into an aqueous solution, ultrasonically stirring the solution until the reaction is thorough, adding lithium manganese iron phosphate, and ultrasonically stirring the mixture, and then separating the solid from the liquid in the suspension. Washing and drying the resultant solid, and then heat-treating the dried solid at 700 °C for 10 hours in an inert atmosphere to obtain lithium manganese iron phosphate coated with lithium iron phosphate.

Adding 2.82 grams of polyaniline and 2.571 grams of carbon nanotube dispersion solution (with a solid content of 7%) into an 80 °C NMP solvent. Ultrasonically stirring and mixing well the mixture, and then adding the lithium manganese iron phosphate coated with the lithium iron phosphate. Continuing to ultrasonically stir the mixture until a homogeneous state, separating the solid from the liquid in the suspension, and then performing vacuum filtration, washing, and drying on the solid substance to obtain a positive electrode material.

### Embodiment 22

The composite positive electrode material of this embodiment is obtained by mixing the positive electrode material of Embodiment 1 with the ternary positive electrode material NCM523 at a mass ratio of 3: 7.

### Comparative Embodiment 5

The composite positive electrode material of this comparative embodiment is obtained by mixing the positive electrode material of Comparative Embodiment 1 with the ternary positive electrode material NCM523 at a mass ratio of 3: 7.

### Test Embodiments 1 to 7

In Test Embodiments 1 to 7, the electrical conductivity and contact angle of composite films that are made of polyaniline and carbon nanotubes at different mass ratios respectively were tested. The electrical conductivity was tested by an SDY-4 four-point probe resistance tester based on the following principles: first, the film surface resistance R of an organic hydrophobic material was measured by using the four-point probe tester, and the electrical conductivity of the organic hydrophobic material was calculated according to σ = 1/(R × W), where σ is the electrical conductivity and W is the film thickness of the organic hydrophobic material. The contact angle was measured by an OCA25-HTV1800 contact angle meter. The dosages of polyaniline and carbon nanotubes in the composite film, the mass percent of carbon nanotubes, the electrical conductivity, and the contact angle in Test Embodiments 1 to 7 are recorded in Table 5.

The composite film in Test Embodiment 2 was prepared according to the following steps:
9.8 grams of polyaniline and 2.86 grams of carbon nanotube dispersion solution (with a solid content of 7%) were ultrasonicated and mixed well in an NMP solvent. The resultant solution was dripped onto a prepared glass substrate by using a pipette, and then the glass substrate was placed into a vacuum oven and dried at 100 °C for 12 hours so that the glass substrate was dried thoroughly. Subsequently, the glass substrate was placed into deionized water to separate out a composite film. The composite film was placed on a piece of filter paper to dry naturally to obtain the composite film.

**Table 5 Constituents, electrical conductivity, and contact angle of composite films in Test Embodiments 1 to 7**

| Embodiment | Polyaniline (g) | Carbon nanotube dispersion solution (with a solid content of 7%) (g) | Mass percent of carbon nanotubes (%) | Electrical conductivity (S/m) | Contact angle (°) |
|---|---|---|---|---|---|
| Test Embodiment 1 | 10 | / | 0 | 5 | 131.47 |
| Test Embodiment 2 | 9.8 | 2.86 | 2 | 69 | 135.54 |
| Test Embodiment 3 | 9.6 | 5.72 | 4 | 97 | 137.81 |
| Test Embodiment 4 | 9.4 | 8.58 | 6 | 94 | 137.45 |
| Test Embodiment 5 | 9.2 | 11.44 | 8 | 96 | 137.13 |
| Test Embodiment 6 | 9.0 | 14.3 | 10 | 71 | 136.56 |
| Test Embodiment 7 | 8.8 | 17.16 | 12 | 47 | 136.72 |

As can be seen from the relevant data in Table 5, the mass percent of carbon nanotubes in the composite films of Test Embodiments 1 to 7 is 0% to 12%, and the contact angles in Test Embodiments 1 to 7 are all greater than 130°, exhibiting high hydrophobicity. The composite film in Test Embodiment 1 contains no carbon nanotubes, the mass percent of carbon nanotubes in the composite film in Test Embodiment 7 is 12%, and the electrical conductivity in Test Embodiments 1 and 7 is less than that of the composite films in Test Embodiments 2 to 6. Evidently, when the mass percent of the hydrophobic conductive carbon material in the second shell layer is 2% to 10%, the second shell layer is of both high conductivity and high hydrophobicity. When the mass percent of the hydrophobic conductive carbon material in the second shell layer is 4% to 8%, the second shell layer is of higher conductivity and higher hydrophobicity.

A process of preparing a pouch-type stacked battery is described below:
(1) Preparing a positive electrode plate: Adding the (composite) positive electrode material provided in each embodiment or comparative embodiment together with polyvinylidene difluoride (PVDF) and conductive carbon into a specified amount of N-methyl-pyrrolidone (NMP), in which the mass ratio between the (composite) positive electrode material, the binder, and the conductive agent is 90: 5: 5. Stirring the mixture in a drying room to produce a homogeneous slurry, and controlling the viscosity of the slurry to be 3000 mPa·S to 10000 mPa·S. Applying the slurry onto aluminum foil, and drying the foil to produce a positive electrode plate.
(2) Preparing a negative electrode plate: Adding graphite, sodium carboxymethyl cellulose (CMC), styrene-butadiene rubber (SBR), and conductive carbon into a specified amount of deionized water, in which the mass ratio between the graphite, the sodium carboxymethyl cellulose, the styrene-butadiene rubber, and the conductive agent is 90: 2: 3: 5. Stirring the mixture to produce a homogeneous slurry, and controlling the viscosity of the slurry to be 3000 mPa·S to 10000 mPa·S. Applying the slurry onto copper foil, and drying the foil to produce a negative electrode plate.
(3) Preparing a pouch-type stacked battery: Stacking the prepared positive electrode plate, negative electrode plate, and separator (polyethylene (PE) porous polymer film) in a Z-shaped stacking pattern to produce a corresponding electrode assembly. Vacuum-drying the electrode assembly in a 90 °C environment for 12 hours, and then ultrasonic welding a positive tab and a negative tab onto the electrode assembly. Using an aluminum material as a positive tab, and using a nickel material as a negative tab. Positioning the positive and negative tabs on the same side of the electrode assembly. Putting the electrode assembly with the welded tabs into an aluminum laminated film of an appropriate size, and packaging the electrode assembly in the form of top-side sealing. Injecting an electrolyte solution, where the electrolyte solution is prepared from LiPF₆ at a concentration of 1 mol/L in a solvent, and the solvent is: ethylene carbonate (EC) + diethyl carbonate (DEC) + dimethyl carbonate (DMC) (at a volume ratio of 1: 1: 1) + 5 wt% fluoroethylene carbonate (FEC). Performing static standing, chemical formation, aging, degassing, secondary sealing, and capacity test to obtain a prepared pouch-type stacked battery.

### Test Part

(1) Testing the C-rate performance: First, a capacity test was performed on the pouch-type stacked battery according to the following process: Leaving the battery to stand for 5 minutes, discharging the battery at a current of 0.33 C until the voltage reaches 2.5 V, leaving the battery to stand for 5 minutes, charging the battery at a constant current of 0.33 C until the voltage reaches 4.3 V, and then charging the battery at a constant voltage until the charge current drops to 0.05 C; leaving the battery to stand for 5 minutes, and then discharging the battery at a current of 0.33 C until the voltage reaches 2.5 V, and recording the discharge capacity at this time as C₀.
   A process of testing the C-rate performance was as follows: Leaving the battery to stand for 5 minutes, discharging the battery at a current of 0.33 C until the voltage reaches 2.5 V, leaving the battery to stand for 5 minutes, charging the battery at a constant current of 0.33 C until the voltage reaches 4.3 V, and then charging the battery at a constant voltage until the charge current drops to 0.05 C; leaving the battery to stand for 5 minutes, and then discharging the battery at a current of 1 C until the voltage reaches 2.5 V, and recording the discharge capacity at this time. When the battery performance was tested at a different C-rate, the " 1 C" in the last step "discharging the battery at a current of 1 C until the voltage reaches 2.5 V" was replaced with a corresponding C-rate such as 2 C or 3 C. The gravimetric capacity of the positive electrode material tested at a different C-rate is obtained by dividing the capacity value obtained in the C-rate performance test by the mass of the (composite) positive electrode material contained in the pouch-type stacked battery.
(2) 25 °C cycle test: The pouch-type stacked battery prepared above was charged at a current of 0.5 C₀ in a voltage plateau of 2.5 V to 4.3 V in a 25 °C constant-temperature environment until the voltage reaches 4.3 V Subsequently, the battery was charged at a constant voltage of 4.3 V until the current is less than or equal to 0.05 mA. The battery was left to stand for 5 minutes, and then discharged at a current of 0.5 C until the voltage reaches 2.5 V The capacity at this time was recorded as Cₙ (n = 1, 2, 3...). The above operations were repeated to determine a capacity fading value. A ratio of Cₙ to C₃ was calculated as the state of health (SOH) of the battery cell. The number of cycles of each battery cell fading to 80% SOH was used as a metric of cycle performance.
(3) Testing the transition metal manganese dissolution: The pouch-type stacked batteries cycled for the same number of cycles in the 25 °C cycle test in different embodiments and comparative embodiments were disassembled. A negative electrode plate was taken out of each of the batteries, and the manganese content on the negative electrode plate was measured by use of inductively coupled plasma mass spectrometry (ICP-MS).
(4) Testing the water content of the material: 1 gram of the positive electrode material prepared in an embodiment or comparative embodiment was baked in a 120 °C environment for 24 hours, and then placed in 5% relative humidity environment for 4 hours. The water content of the material was measured again as a metric of performance.

The C-rate performance, cycle performance, transition metal manganese dissolution, and water content of the pouch-type stacked batteries prepared from the positive electrode materials in Embodiments 1 to 22 and Comparative Embodiments 1 to 5 are recorded in Table 6.

**Table 6 C-rate performance, cycle performance, transition metal manganese dissolution, and water content of the pouch-type stacked batteries prepared from the positive electrode materials in Embodiments 1 to 22 and Comparative Embodiments 1 to 5**

| Embodiment | C-rate performance (mAh·g-1) | | | | Cycle performance (els) | Manganese dissolution (ppm) | Water content (ppm) |
|---|---|---|---|---|---|---|---|
| | 0.5 C | 1 C | 2 C | 3 C | | | |
| Embodiment 1 | 133.40 | 132.33 | 127.57 | 119.82 | 4212 | 177 | 253 |
| Embodiment 2 | 133.25 | 130.41 | 124.96 | 116.63 | 3363 | 343 | 595 |
| Embodiment 3 | 133.51 | 132.62 | 128.00 | 120.16 | 4312 | 157 | 247 |
| Embodiment 4 | 133.47 | 132.42 | 127.78 | 120.00 | 4287 | 153 | 263 |
| Embodiment 5 | 133.42 | 131.75 | 126.44 | 118.10 | 4179 | 146 | 258 |
| Embodiment 6 | 133.45 | 131.48 | 126.31 | 117.91 | 4172 | 142 | 247 |
| Embodiment 7 | 133.26 | 130.55 | 125.12 | 117.07 | 3990 | 159 | 249 |
| Embodiment 8 | 133.23 | 130.43 | 124.89 | 116.76 | 3882 | 154 | 250 |
| Embodiment 9 | 133.12 | 129.54 | 123.84 | 116.07 | 3657 | 151 | 242 |
| Embodiment 10 | 133.42 | 130.78 | 125.25 | 118.26 | 4375 | 152 | 477 |
| Embodiment 11 | 133.44 | 131.47 | 126.07 | 119.47 | 4327 | 153 | 282 |
| Embodiment 12 | 133.34 | 132.55 | 127.87 | 120.19 | 4331 | 155 | 252 |
| Embodiment 13 | 133.33 | 132.73 | 127.89 | 120.36 | 4322 | 156 | 238 |
| Embodiment 14 | 133.43 | 132.79 | 128.06 | 120.41 | 4239 | 159 | 222 |
| Embodiment 15 | 133.35 | 132.64 | 127.94 | 120.48 | 4165 | 163 | 241 |
| Embodiment 16 | 133.30 | 132.63 | 127.90 | 120.48 | 4121 | 168 | 234 |
| Embodiment 17 | 132.81 | 131.89 | 127.22 | 119.69 | 4088 | 166 | 246 |
| Embodiment 18 | 134.21 | 132.24 | 127.18 | 118.27 | 3945 | / | 248 |
| Embodiment 19 | 133.38 | 132.10 | 127.19 | 119.64 | 4127 | / | 239 |
| Embodiment 20 | 133.35 | 131.23 | 126.42 | 117.64 | 3812 | / | 244 |
| Embodiment 21 | 134.17 | 132.31 | 127.35 | 118.85 | 4082 | / | 262 |
| Comparative Embodiment 1 | 133.21 | 130.32 | 124.74 | 116.62 | 2085 | 382 | 613 |
| Comparative Embodiment 2 | 133.30 | 130.36 | 124.81 | 116.61 | 4401 | 152 | 626 |
| Comparative Embodiment 3 | 132.87 | 131.71 | 126.69 | 119.60 | 3974 | 167 | 237 |
| Comparative Embodiment 4 | 133.83 | 130.90 | 125.63 | 117.93 | 3175 | 274 | 343 |
| Embodiment 22 | 171.40 | 166.97 | 157.71 | 146.15 | 4217 | / | / |
| Comparative Embodiment 5 | 170.89 | 163.88 | 153.51 | 140.30 | 2625 | / | / |

As can be seen from the relevant data in Table 6, compared with the uncoated and unmodified positive electrode material in Comparative Embodiment 1, the positive electrode materials in Embodiments 1 to 21 can significantly suppress manganese dissolution during cycling of the positive electrode materials and reduce the water content of the positive electrode materials. The cycle performance of the positive electrode materials in Embodiments 1 to 21 is significantly improved.

Specifically, the shell layer mass sum percentage and the ratio of the thickness sum of the shell layers to Dv₅₀ of the positive electrode material (h/d) vary between the positive electrode materials in Embodiments 1 to 9. As can be seen, in Embodiment 1 and Embodiments 3 to 8, the shell layer mass sum percentage is 1% to 40%, the h/d ratio is 0.03 to 0.39, and the manganese dissolution amount and water content are lower.

In Embodiment 3 and Embodiments 10 to 17, the mass percent of the second shell layer in the total mass of shell layers varies. As can be seen from the data in Table 6, when the mass percent of the second shell layer in the total mass of shell layers is 20% to 60% or even 30% to 50%, the manganese dissolution amount and water content of the positive electrode material are lower. In the positive electrode materials in Comparative Embodiments 2 and 3, the mass percent of the second shell layer in the total mass of the shell layers is 0% and 100%, respectively. In Comparative Embodiment 2, the second shell layer is not contained, and the positive electrode material exerts an effect of suppressing manganese dissolution to some extent, but the water content of the positive electrode material is high. In Comparative Embodiment 3, the first shell layer is not contained, and the water content of the positive electrode material is relatively low, but the manganese dissolution amount is increased, and the cycle performance is deteriorated. Evidently, the lithium manganese iron phosphate double-coated with the first shell layer and the second shell layer in this application can suppress the problems such as manganese dissolution and water absorption in the lithium manganese iron phosphate, and improve the cycle performance of the positive electrode material.

In Embodiment 14 and Embodiments 18 to 21, the material of the second shell layer varies. As can be seen from the data in Table 6, the C-rate performance and cycle performance of the positive electrode materials in Embodiment 14 and Embodiments 18 to 21 are relatively high. Especially, when polyaniline and polythiophene are used as a conductive polymer, the improvement effect is prominent.

The positive electrode material in Comparative Embodiment 4 differs from that in Embodiment 3 in that the lithium manganese iron phosphate, the lithium iron phosphate, the polyaniline, and the carbon nanotubes are just mixed simply, without forming a coating structure on the surface of the lithium manganese iron phosphate. In contrast, the water content of the positive electrode material in Comparative Embodiment 4 is significantly higher than that in Embodiment 3, and the manganese dissolution amount is significantly increased. The cycle performance of the positive electrode material in Comparative Embodiment 4 is lower.

The composite positive electrode material in Embodiment 22 contains a ternary positive electrode material NCM523 and the positive electrode material prepared in Embodiment 1, thereby further improving the C-rate performance on the basis of Embodiment 1, and being superior in both C-rate performance and cycle stability. In contrast, the composite positive electrode material in Comparative Embodiment 5 contains the ternary positive electrode material NCM523 and the positive electrode material prepared in Comparative Embodiment 1. Although the C-rate performance is improved, the cycle performance of the composite positive electrode material in Comparative Embodiment 5 is relatively low due to the low electrical conductivity and the problems such as a large manganese dissolution amount and high water absorptivity of the lithium manganese iron phosphate.

The technical features in the foregoing embodiments may be combined arbitrarily. For brevity, not all possible combinations of the technical features in the embodiments are described. However, to the extent that no conflict exists, all such combinations of the technical features are considered falling within the scope hereof.

The foregoing embodiments are merely several exemplary embodiments of this application to facilitate a detailed understanding of the technical solutions hereof, but are not to be understood as any limitation on the patent protection scope hereof. It is hereby noted that several variations and improvements, which may be made to the embodiments by a person of ordinary skill in the art without departing from the concept of this application, fall within the protection scope of this application. Understandably, all the technical solutions derived by a person skilled in the art through logical analysis, reasoning, or limited tests based on the technical solutions hereof still fall within the protection scope of the claims appended hereto. Therefore, the patent protection scope of this application is subject to the content of the claims, and the specification and the accompanying drawings may be used for interpreting the content of the claims.

## Claims

1. A positive electrode material, comprising: a core, a first shell layer, and a second shell layer, wherein
the first shell layer wraps around a surface of the core, and the second shell layer wraps around a surface of the first shell layer; and
the core comprises a lithium manganese iron phosphate material, the first shell layer comprises a polyanionic positive electrode material, the polyanionic positive electrode material contains no manganese, and the second shell layer comprises a hydrophobic conductive material.

2. The positive electrode material according to claim 1, wherein the hydrophobic conductive material comprises at least one of a hydrophobic conductive polymer or a hydrophobic conductive carbon material.

3. The positive electrode material according to claim 2, wherein the hydrophobic conductive polymer is at least one selected from polypyrrole, polyaniline, polythiophene, or polyacetylene; and/or
the hydrophobic conductive carbon material is at least one selected from carbon nanotubes or carbon nanofibers.

4. The positive electrode material according to any one of claims 1 to 3, wherein a mass percent of the hydrophobic conductive carbon material in the second shell layer is 2% to 10%; and
optionally, the mass percent of the hydrophobic conductive carbon material in the second shell layer is 4% to 8%.

5. The positive electrode material according to any one of claims 1 to 4, wherein the polyanionic positive electrode material is at least one selected from a phosphate-based material, a silicate-based material, or a borate-based material.

6. The positive electrode material according to claim 5, wherein the phosphate-based material comprises at least one of LiFePO₄, LiNiPO₄, LiCoPO₄, Li₃V₂(PO₄)₃, LiVOPO₄, or LiTi₂(PO₄)₃;
the silicate-based material comprises at least one of Li₂FeSiO₄, Li₂NiSiO₄, or Li₂CoSiO₄; and the borate-based material comprises at least one of LiFeBO₃ or LiCoBO₃.

7. The positive electrode material according to any one of claims 1 to 6, wherein a ratio of a mass sum of the first shell layer and the second shell layer to a mass of the positive electrode material is 0.1% to 50%;
optionally, the ratio of the mass sum of the first shell layer and the second shell layer to the mass of the positive electrode material is 1% to 40%;
optionally, the ratio of the mass sum of the first shell layer and the second shell layer to the mass of the positive electrode material is 1% to 30%; and
optionally, the ratio of the mass sum of the first shell layer and the second shell layer to the mass of the positive electrode material is 1% to 20%.

8. The positive electrode material according to any one of claims 1 to 7, wherein, in a total mass of the first shell layer and the second shell layer, a mass percent of the second shell layer is 10% to 90%;
optionally, in the total mass of the first shell layer and the second shell layer, the mass percent of the second shell layer is 20% to 60%; and
optionally, in the total mass of the first shell layer and the second shell layer, the mass percent of the second shell layer is 30% to 50%.

9. The positive electrode material according to any one of claims 1 to 8, wherein a ratio of a thickness sum of the first shell layer and the second shell layer to Dv₅₀ of the positive electrode material is 0.01 to 0.45;
optionally, the ratio of the thickness sum of the first shell layer and the second shell layer to Dv₅₀ of the positive electrode material is 0.03 to 0.39;
optionally, the ratio of the thickness sum of the first shell layer and the second shell layer to Dv₅₀ of the positive electrode material is 0.03 to 0.31; and
optionally, the ratio of the thickness sum of the first shell layer and the second shell layer to Dv₅₀ of the positive electrode material is 0.03 to 0.26.

10. A method for preparing the positive electrode material according to any one of claims 1 to 9, wherein the method comprises the following steps:
mixing a raw material of a polyanionic positive electrode material with a lithium manganese iron phosphate material, and performing heat treatment in an inert atmosphere so that a surface of the lithium manganese iron phosphate material is coated with the first shell layer to produce an intermediate; and
mixing a hydrophobic conductive material with the intermediate well so that a surface of the first shell layer is coated with the second shell layer to produce the positive electrode material.

11. A composite positive electrode material, comprising a ternary positive electrode material and the positive electrode material according to any one of claims 1 to 9.

12. A positive electrode plate, comprising the positive electrode material according to any one of claims 1 to 9 or the composite positive electrode material according to claim 11.

13. A secondary battery, comprising the positive electrode plate according to claim 12.

14. A battery module, comprising the secondary battery according to claim 13.

15. A battery pack, comprising the battery module according to claim 14.

16. An electrical device, comprising at least one of the secondary battery according to claim 13, the battery module according to claim 14, or the battery pack according to claim 15.
